# EUROPÄISCHE PATENTANMELDUNG

(11) **EP 3 395 552 A2**
(43) Veröffentlichungstag der Anmeldung: **31.10.2018**
(21) Anmeldenummer: 18161727.5
(22) Anmeldetag: 14.03.2018
(51) Int. Cl.: B29C 70/34, B29C 70/54, B29B 11/16

(54) **HALBZEUG, VERFAHREN UND KONSOLIDIERUNGSWERKZEUG ZUR HERSTELLUNG EINES THERMOPLASTISCHEN FASERVERBUNDBAUTEILS**

(30) Priorität: 05.04.2017 DE 102017205792
(71) Anmelder: Premium AEROTEC GmbH, 86179 Augsburg (DE)
(72) Erfinder: MIARIS, Angelos, 28209 Bremen (DE); NEITZEL, Tim, 28355 Bremen (DE); ULRICH, Melanie, 28879 Grasberg (DE); EDELMANN, Klaus, 27777 Ganderkesee (DE)
(74) Vertreter: Isarpatent

(57) **Zusammenfassung**

Die vorliegende Offenbarung betrifft ein Halbzeug (1) zur Herstellung eines thermoplastischen Faserverbundbauteils, mit einem Stapel (2) von zumindest teilweise lokal miteinander verbundenen thermoplastischen Faserverbundlagen, wobei die Faserverbundlagen zum ondulationsfreien Ausgleich einer Bauteilkrümmung bei einem Einlegen in einen gekrümmten oder komplexen Formabschnitt eines Konsolidierungswerkzeugs zumindest abschnittsweise aneinander abgleitbar ausgebildet sind. Die vorliegende Ofenbarung betrifft ferner ein Konsolidierungswerkzeug zum Herstellen eines thermoplastischen Faserverbundbauteils, insbesondere aus einem solchen Halbzeug, ein Verfahren zur Herstellung eines thermoplastischen Faserverbundbauteils sowie ein entsprechend hergestelltes Faserverbundbauteil.

## Beschreibung

### TECHNISCHES GEBIET

Die vorliegende Erfindung betrifft ein Halbzeug zur Herstellung eines thermoplastischen Faserverbundbauteils, ein Verfahren zur Herstellung eines thermoplastischen Faserverbundbauteils, ein Konsolidierungswerkzeug zum Herstellen eines thermoplastischen Faserverbundbauteils sowie ein entsprechend hergestelltes thermoplastisches Faserverbundbauteil.

### HINTERGRUND

Obwohl auf beliebige thermoplastische Faserverbundbauteile anwendbar, werden die vorliegende Erfindung sowie die ihr zugrunde liegende Problematik in Bezug auf thermoplastische Faserverbundbauteile eines Luft- oder Raumfahrzeugs näher erläutert.

Ein Ansatz für die Herstellung eines thermoplastischen Faserverbundbauteils sieht einen Aufbau des thermoplastischen Faserverbundbauteils aus einer Vielzahl von bedarfsgerecht abgelegten einzelnen Halbzeugen, sogenannten Tapes, vor. Diese Herstellungsart, die auch als Tapelegen bezeichnet wird, ist beispielsweise in der EP 1 315 613 B1 beschrieben. Ebene Gelege aus thermoplastischen CFK-Laminaten können damit einfach und schnell hergestellt werden. Dabei werden breite Tapes (bis 150 mm) flächig abgelegt und jeweils mit der darunter liegenden Tapelage fixiert bzw. geheftet.

In der Luft- und Raumfahrt werden jedoch oftmals gekrümmte oder komplexe Strukturen mit relativ großen Abmessungen, beispielsweise im Bereich mehrerer Meter, benötigt.

Eine Ablegetechnik, mit der grundsätzlich auch gekrümmte Formen realisiert werden können, beschreibt die WO 2014 040871 A1. Kern dieses Tapelegeprozesses ist die aktive Kontrolle einer Heizquelle während des Ablegens der Tapes. Tapelegeköpfe führen das faserverstärkte Tape dazu über verschiedene Führungs- und Fördereinheiten zu einer Andruckrolle, wo das Tape auf dem Formwerkzeug abgelegt und direkt konsolidiert wird.

### ZUSAMMENFASSUNG DER ERFINDUNG

Vor diesem Hintergrund ist es Aufgabe der vorliegenden Erfindung, ein verbessertes Halbzeug, Verfahren und Konsolidierungswerkzeug zur Herstellung eines thermoplastischen Faserverbundbauteils sowie ein entsprechend hergestelltes Faserverbundbauteil anzugeben.

Erfindungsgemäß wird diese Aufgabe durch ein Halbzeug mit den Merkmalen des Patentanspruchs 1 und/oder durch ein Verfahren mit den Merkmalen des Patentanspruchs 8 und/oder durch ein Konsolidierungswerkzeug mit den Merkmalen des Patentanspruchs 9 und/oder durch ein Faserverbundbauteil mit den Merkmalen des Patentanspruchs 15 gelöst.

### Demgemäß ist vorgesehen:

- Ein Halbzeug zur Herstellung eines thermoplastischen Faserverbundbauteils, mit einem Stapel von zumindest teilweise lokal miteinander verbundenen thermoplastischen Faserverbundlagen, wobei die Faserverbundlagen zum ondulationsfreien Ausgleich einer Bauteilkrümmung bei einem Einlegen in einen gekrümmten oder komplexen Formabschnitt eines Konsolidierungswerkzeugs zumindest abschnittsweise aneinander abgleitbar ausgebildet sind.
- Ein Verfahren zum Herstellen eines thermoplastischen Faserverbundbauteils, mit den Schritten: Bereitstellen eines erfindungsgemäßen Halbzeugs; Einlegen des Halbzeugs in einen gekrümmten oder komplexen Formabschnitt eines Konsolidierungswerkzeugs, wobei die Faserverbundlagen zum ondulationsfreien Ausgleich einer Bauteilkrümmung zumindest abschnittsweise aneinander abgleiten; und Konsolidieren der Faserverbundlagen zu einem gemeinsamen Bauteil.
- Konsolidierungswerkzeug zum Herstellen eines thermoplastischen Faserverbundbauteils, insbesondere aus einem erfindungsgemäßen Halbzeug und/oder mit einem erfindungsgemäßen Verfahren, mit: einem eine Bauteilform definierenden Formabschnitt; einer den Formabschnitt abdeckenden Vakuumabdeckung zum Ausüben eines Unterdrucks auf das Material des herzustellenden Bauteils; einer sich über eine Bauteiloberfläche erstreckenden Transportschicht zum Abtransport von aus dem Material des herzustellenden Bauteils abgesaugten Gasen; und einer luftdurchlässigen Oberflächenschicht, welche zwischen der Transportschicht und dem Material des herzustellenden Bauteils angeordnet ist.
- Gekrümmtes oder komplexes thermoplastisches Faserverbundbauteil, welches mit einem erfindungsgemäßen Halbzeug und/oder mit einem erfindungsgemäßen Verfahren und/oder mit einem erfindungsgemäßen Konsolidierungswerkzeug hergestellt ist.

Ein der vorliegenden Erfindung zugrunde liegender Aspekt besteht darin, den Schichtaufbau eines thermoplastischen Faserverbund-Halbzeugs zumindest teilweise lokal befestigt und zumindest abschnittsweise abgleitbar vorzusehen. Auf diese Weise ist es ermöglicht, durch Abgleiten der Faserverbundschichten untereinander Ondulationen bzw. Wellen bei dem Einlegen des Halbzeugs in ein gekrümmtes oder komplexes Konsolidierungswerkzeug zu vermeiden. Das Einlegen ist somit ondulationsfrei bzw. wellenfrei ermöglicht.

Ferner liegt ein der Erfindung zugrunde liegender Aspekt darin, ein Konsolidierungswerkzeug angepasst an die Anforderungen abgleitbarer Einzelschichten zur verbesserten Entlüftung von zwischen den Einzelschichten vorhandenen Gasen bzw. Luft mit einer luft- bzw. gasdurchlässigen Oberflächenschicht zu versehen, welche zwischen der Transportschicht und dem Material des herzustellenden Bauteils angeordnet ist. Auf diese Weise ist es ermöglicht, trotz der abgleitbaren Faserverbundschichten, welche vor der Konsolidierung Luft einschließen können, Einschlüsse im konsolidierten Bauteil zu vermeiden.

Die Konsolidierung ist ein bei thermoplastischen Faserverbundbauteilen üblicher Verfestigungs- bzw. Stabilisierungsprozess, in der Regel unter externem Druck oder internem Unterdruck bzw. Vakuum und Hitze, wobei insbesondere Luft bzw. Gas aus den Halbzeugen entfernt und ein fester Stoffschluss des Materials, insbesondere durch Verschmelzen, hergestellt wird.

Vorteilhaft werden somit im Vergleich zu herkömmlichen Tapelegeverfahren für geheftete Strukturen auf der Innenseite von Krümmungsradien beim Einlegen in eine gekrümmte oder komplexe Form entstehende und erfindungsgemäß durch das Abgleiten ausgeglichene Ondulationen vermieden.

Ferner ist vorteilhaft in dem Konsolidierungswerkzeug eine angepasste bzw. verbesserte Entlüftung geschaffen, welche neben dem üblichen Abtransport von Gasen in Bauteilebene bzw. xy-Ebene (durch die Transportschicht) vorteilhaft zusätzlich durch die luftdurchlässige Oberflächenschicht auch einen Abtransport von Luft bzw. Gas normal dazu bzw. in z-Richtung erlaubt. Darüber hinaus dient das Vorsehen einer Oberflächenschicht zur Einstellung bzw. Herstellung einer gewünschten verbesserten Oberflächengüte bzw. Oberflächenqualität, beispielsweise bemessen anhand der mittleren Oberflächenrauhigkeit, die insbesondere die Anforderungen im Luftfahrtbereich erfüllt. Die Oberflächengüte bzw. Oberflächenqualität kann zusätzlich durch eine angepasste Auswahl der Transportschicht optimiert werden.

Somit können nicht nur ebene, sondern auch gekrümmte oder komplexe, d. h. insbesondere mehrfach gekrümmte, Faserverbundbauteile mit hoher Qualität hergestellt werden.

Im Vergleich zu bisherigen Tapelegeverfahren mit direkter Konsolidierung für gekrümmte Formen weist die vorliegende Erfindung den Vorteil auf, dass wegen der vergleichsweise geringen Ablegerate dieser Verfahren (i.d.R. max. 5 kg/h) größere Bauteile, beispielsweise Rumpfsektionen für ein Luft- oder Raumfahrzeug, nun viel schneller, einfacher und wirtschaftlicher hergestellt werden können. Darüber hinaus sind vorteilhaft erfindungsgemäß auch nicht wie bisher besondere Vorkehrungen auf einem Formwerkzeug für eine erste Schicht nötig um die thermoplastischen Bändchen in der gewünschten Position zu fixieren. Vielmehr kann erfindungsgemäß das Halbzeug als Ganzes auf einmal, beispielsweise mittels eines Vakuumgreifers oder dergleichen, in den Formabschnitt des Konsolidierungswerkzeugs eingelegt werden.

Bei den thermoplastischen Faserverbundlagen handelt es sich um, insbesondere mit unidirektionalen Fasern, faserverstärkte Lagen. Insbesondere kann es sich um in einer Thermoplastmatrix eingebettete Fasern handeln. Denkbar ist aber auch eine andere Ausgestaltung thermoplastischer Faserverbundlagen, beispielsweise aus sogenannten Hybridrovings bzw. gemischten Strängen mit thermoplastischen und verstärkenden Fasern, oder dergleichen.

Bei den verstärkenden Fasern kann es sich insbesondere um Kohlenstofffasern handeln. Andere Faserarten, beispielsweise Glasfasern oder dergleichen, sind aber ebenso denkbar.

Unter einer lokalen Verbindung der thermoplastischen Faserverbundlagen ist zu verstehen, dass diese nur abschnittsweise, insbesondere nur punktuell, miteinander verbunden sind. Beispielsweise können punktuell kleinflächige Schweißpunkte gesetzt werden. Auch lokale z-Verbindungsmittel, beispielsweise sogenannte z-Pins, oder dergleichen sind einsetzbar. Im Übrigen liegen die Faserverbundlagen abseits der verbundenen Abschnitte abgleitbar, vorzugsweise lose, aufeinander.

Teilweise lokal miteinander verbundene thermoplastische Faserverbundlagen eines Stapels können beispielsweise in Form von gestapelten Paketen vorgesehen sein. Ein Paket weist dabei mehrere lokal miteinander verbundene Faserverbundlagen auf. Die Pakete sind untereinander unverbunden und liegen, insbesondere lose, aufeinander auf.

Unter einer zumindest abschnittsweise aneinander abgleitbaren Ausbildung ist zu verstehen, dass zum einen die lokalen Verbindungen ausgebildet und positioniert sind, um ein abschnittsweises Abgleiten zu erlauben. Zum anderen ist auch das Material, insbesondere das thermoplastische Material, der thermoplastischen Faserverbundlagen derart ausgebildet, dass es ein zumindest abschnittsweises Abgleiten der Faserverbundlagen aneinander erlaubt. Insbesondere weist das Thermoplastmaterial entsprechende Reibungseigenschaften, beispielsweise einen vergleichsweise niedrigen Reibwert des thermoplastischen Materials bei Reibung aneinander und/oder eine entsprechend glatte Oberfläche, auf.

Geeignete thermoplastische Materialien können unter anderem beispielsweise Polyphenylensulfid (PPS), Polyetheretherketon (PEEK), Polyetherketonketon (PEKK) und/oder Polyetherimid (PEI) enthalten. Denkbar wäre auch der Einsatz von Fluorpolymeren, wie beispielsweise PTFE, sowie von Mischungen derartiger thermoplastischer Materialien.

Ein Stapel weist stets um zumindest zwei Faserverbundlagen auf. Insbesondere ist in dem Stapel eine einstellige Anzahl von Faserverbundlagen vorgesehen, die zumindest teilweise lokal miteinander verbunden sind.

Vorzugsweise sind die thermoplastischen Faserverbundlagen eines Stapels, zumindest im Wesentlichen, deckungsgleich gestapelt.

Sofern ein Stapel mehrere Pakete lokal miteinander verbundener thermoplastischer Faserverbundlagen enthält, weist ein Paket vorzugsweise nur wenige Lagen auf. Insbesondere ist pro Paket eine einstellige Anzahl von Faserverbundlagen vorgesehen, welche zumindest lokal untereinander verbunden sind.

Eine geringere Bauteilkrümmung erlaubt in der Regel eine Stapelung einer größeren Anzahl von Einzellagen in einem Stapel oder Paket als eine starke Bauteilkrümmung. Die Anzahl der Faserverbundlagen eines Stapels/Pakets kann daher insbesondere auf die herzustellende auf Bauteilkrümmung abgestimmt vorgesehen sein.

Die thermoplastischen Faserverbundlagen können zur Herstellung des Halbzeugs für ein Faserverbundbauteil bereits als Halbzeuge, beispielsweise in Form von sogenannten Tapes, vorgefertigt sein. Das erfindungsgemäße Halbzeug für ein Faserverbundbauteil kann somit aus vorangehenden Halbzeugen zusammengesetzt oder zusammensetzbar ausgebildet sein.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform eines Halbzeugs umfasst der Stapel ein erstes Paket miteinander verbundener thermoplastischer Faserverbundlagen und ein zweites Paket miteinander verbundener thermoplastischer Faserverbundlagen. Die thermoplastischen Faserverbundlagen eines Pakets können dabei untereinander zumindest lokal verbunden sein. Das zweite Paket liegt dabei vollflächig auf dem ersten Paket auf und ist zum ondulationsfreien Ausgleich einer Bauteilkrümmung auf dem ersten Paket abgleitbar vorgesehen. Insbesondere liegt das zweite Paket dazu lose auf dem ersten Paket auf. Dadurch, dass in den Paketen immer nur wenige Lagen miteinander verbunden sind, ist die jeweilige Ondulation an der Innenseite minimal oder durch geringe Stauchung/Dehnung des thermoplastischen Materials eliminiert. Je nach Bauteilkrümmung kann so eine maximale Einzelpaketstärke bestimmt werden und die einzelnen Pakete dann zu einem Stapel gelegt werden. Somit werden Ondulationen verhindert und auf diese Weise ein exakter vorbestimmter Faserverlauf auch bei gekrümmten oder komplexen Bauteilen gewährleistet.

Das zweite Paket kann bei einer Ausführung vor einem Einlegen in ein Konsolidierungswerkzeug auf das erste Paket aufgelegt werden bzw. auflegbar ausgebildet sein. In diesem Fall wird der Stapel mit beiden Paketen gemeinsam in das Konsolidierungswerkzeug eingelegt. Dabei gleitet das erste Paket während dem Einlegen auf dem zweiten Paket ab.

Ferner kann bei weiteren Ausführungsformen das zweite Paket auch auf das bereits in das Konsolidierungswerkzeug eingelegte erste Paket aufgelegt werden bzw. auflegbar ausgebildet sein.

Gemäß einer weiteren Ausführungsform eines Halbzeugs weist der Stapel eine erste, in Richtung eines Bauteilkrümmungsverlaufs durchgehende, Faserverbundlage und eine zweite Faserverbundlage auf. Die zweite Faserverbundlage weist eine Mehrzahl von jeweils lokal mit der ersten Faserverbundlage verbundenen unidirektionalen Faserlagenstreifen auf. Die Faserlagenstreifen sind quer zu dem Bauteilkrümmungsverlauf angeordnet und entlang des Bauteilkrümmungsverlaufs unterbrochen. Auf diese Weise ist eine abschnittsweise Bewegungsfreiheit der zweiten Faserverbundlage relativ zur ersten Faserverbundlage geschaffen, welche das abschnittweise Abgleiten der zweiten Faserverbundlage an der ersten Faserverbundlage ermöglicht. Ferner ist so ein unidirektionaler Faserverlauf in jeder der Faserverbundlagen ermöglicht.

Gemäß einer vorteilhaften Weiterbildung weisen die Faserlagenstreifen an einer bezogen auf die erste Faserverbundlage inneren Krümmungsseite einen Abstand zueinander auf, welcher derart vorgesehen ist, dass er bei dem Einlegen in die gekrümmte oder komplexe Konsolidierungsform zur Anlage der Faserlagenstreifen aneinander kompensiert wird. Entsprechend ist der Abstand kompensierbar ausgelegt und/oder ausgebildet. Insbesondere wird bzw. ist der Abstand derart angepasst an die Bauteilkrümmung ausgelegt, dass er durch die Krümmung exakt bzw. mit hoher Genauigkeit kompensiert wird. Es kann sich dabei beispielsweise um wenige Hundertstel oder Zehntel Millimeter handeln. Bei der Dimension des Abstandes kann es sich auch im Vergleich zur Bauteilgröße um sehr kleine Beträge handeln, beispielswiese im Zehntel oder Hundertstel Millimeterbereich bei Bauteilabmessungen im Meterbereich. Auf diese Weise kann die Krümmung des Bauteils in dem Halbzeug vorempfunden werden, indem die unterste Lage vollständig gelegt und die darauf aufbauende Lage der Krümmung entsprechende Lücken aufweist, welche durch das Einlegen in den, insbesondere gekrümmten, Formabschnitt zusammengeschoben werden.

Gemäß einer weiteren Weiterbildung ist zumindest eine dritte Faserverbundlage vorgesehen, welche auf die zweite Faserverbundlage aufgebracht ist und im Vergleich zu der zweiten Faserverbundlage an einer inneren Krümmungsseite stärker voneinander beabstandete Faserlagenstreifen aufweist. In gleicher Weise kann auch eine vierte oder beliebige weitere Faserverbundlage vorgesehen sein, die mit größeren Lücken auf die dritte oder jeweils vorangehende Faserverbundlageaufgebracht ist. Die unterste bzw. erste Lage, welche einer äußersten Lage der Krümmung entspricht, ist somit vollständig bzw. durchgehend ohne Lücken vorgesehen, während die darauf aufbauenden Lagen der Krümmung Unterbrechungen mit bei steigender Lagenhöhe entsprechend immer größeren Lücken bzw. Abständen aufweisen, welche durch das Einlegen in die Form zu einer direkten Anlage der jeweiligen Faserlagenstreifen zusammengeschoben werden.

Gemäß einer weiteren Ausführungsform eines Halbzeugs weisen die Faserlagenstreifen an einer bezogen auf die erste Faserverbundlage äußeren Krümmungsseite einen Überlapp zueinander auf, welcher derart vorgesehen ist, dass er bei dem Einlegen in die gekrümmte oder komplexe Konsolidierungsform zur Anlage der Faserlagenstreifen aneinander kompensiert wird. Insbesondere wird der Abstand auch hier derart ausgelegt, dass er durch die Krümmung exakt bzw. mit hoher Genauigkeit kompensiert wird. Es kann sich dabei beispielsweise ebenfalls um wenige Hundertstel oder Zehntel Millimeter handeln. Bei der Dimension des Überlapps kann es sich auch im Vergleich zur Bauteilgröße um sehr kleine Beträge handeln, beispielswiese im Zehntel oder Hundertstel Millimeterbereich bei Bauteilabmessungen im Meterbereich. Auf diese Weise kann die Krümmung des Bauteils in dem Halbzeug vorempfunden werden, indem die oberste Lage vollständig gelegt und die darunter liegende Lage der Krümmung entsprechende überlappende Streifen aufweist, welche durch das Einlegen in den, insbesondere gekrümmten, Formabschnitt auseinandergezogen werden.

Bei einer Weiterbildung ist auch hier zumindest eine dritte Faserverbundlage vorgesehen, welche auf die zweite Faserverbundlage aufgebracht ist und im Vergleich zu der zweiten Faserverbundlage an einer äußeren Krümmungsseite stärker überlappende Faserlagenstreifen aufweist. In gleicher Weise kann auch hier eine vierte Faserverbundlage oder beliebige weitere Faserverbundlagen vorgesehen sein, die mit größerem Überlapp auf die dritte oder jeweils vorangehende Faserverbundlageaufgebracht ist. Somit wird eine Variante bereitgestellt, wobei die oberste Lage bzw. innerste Lage der Krümmung vollständig bzw. durchgehend ohne Lücken gelegt ist und die darunterliegenden bzw. nach außen darauf aufbauenden Lagen immer weiter überlappende Faserlagenstreifen aufweisen.

Möglich sind ferner Ausführungsformen, wobei in der oben dargestellten Weise kombiniert an einer inneren Krümmungsseite eine zweite und ggfs. weitere Faserverbundlagen mit entsprechenden Abständen und an einer äußeren Krümmungsseite eine weitere zweite und ggfs. weitere Faserverbundlagen mit entsprechendem Überlapp vorgesehen sind. In diesem Fall bildet die erste Faserverbundlage eine mittlere durchgehende Lage, sodass die Krümmung an beiden Seiten des Halbzeugs vorempfunden ist.

Gemäß einer weiteren Ausführungsform eines Halbzeugs weist auch die erste Faserverbundlage eine Mehrzahl von unidirektionalen Faserlagenstreifen auf. Diese sind entlang dem Bauteilkrümmungsverlauf angeordnet und quer zu dem Bauteilkrümmungsverlauf unterbrochen nebeneinander, vorzugsweise direkt nebeneinander, vorgesehen, so dass sich die Faserlagenstreifen der ersten Faserverbundlage mit den Faserlagenstreifen der zweiten Faserverbundlage kreuzen. Die Faserlagenstreifen der ersten Lage sind insbesondere senkrecht zu den Faserlagenstreifen der zweiten Lage ausgerichtet. Somit ist vorteilhaft die erste Faserverbundlage auf gleiche Weise herstellbar wie die zweite Faserverbundlage. Dennoch ist eine für eine hohe Maßhaltigkeit ausreichende Stabilität des Halbzeugs, insbesondere in beide Richtungen der Bauteilebene, bereitgestellt. Ferner ist ein einfach herstellbarer unidirektionaler Faserverlauf in jeder Faserverbundlage ermöglicht.

Beispielsweise können als Faserverbundstreifen bei einer Ausführungsform marktübliche thermoplastische unidirektionale Faserverbundtapes eingesetzt werden, sodass es vorteilhaft keinen besonderen oder unüblichen Ausgangsstoffen zum Herstellen des Halbzeugs bedarf. Zum Herstellen des Halbzeugs werden die Tapes in der ersten Faserverbundlage direkt aneinander und in der zweiten Faserverbundlagequer dazu, je nach Ausführung, mit einem Abstand oder Überlapp aneinander gelegt. An den Kreuzungspunkten wird jeweils ein die erste und zweite Faserverbundlage verbindendes Verbindungsmittel, beispielsweise ein kleinflächiger Schweißpunkt, gesetzt. Somit ist das Halbzeug trotz der hohen Anforderungen an den Faserverlauf und an dessen Genauigkeit auf einfache Weise herstellbar.

Bei einer Ausführungsform eines Verfahrens zum Herstellen eines thermoplastischen Faserverbundbauteils umfasst das Bereitstellen des Halbzeugs ein dementsprechendes Herstellen des Halbzeugs.

Gemäß einer Ausführungsform eines Verfahrens zum Herstellen eines thermoplastischen Faserverbundbauteils wird der Stapel mit einem ersten Paket miteinander verbundener thermoplastischer Faserverbundlagen und einem zweiten Paket miteinander verbundener thermoplastischer Faserverbundlagen bereitgestellt, wobei das zweite Paket vollflächig auf das erste Paket aufgelegt wird und bei dem Einlegen ondulationsfrei zum Ausgleich der Bauteilkrümmung auf dem ersten Paket abgleitet.

Gemäß einer weiteren Ausführungsform des Verfahrens wird der Stapel mit einer ersten, in Richtung eines Bauteilkrümmungsverlaufs durchgehenden, und einer zweiten Faserverbundlage bereitgestellt, wobei die zweite Faserverbundlage mit einer Mehrzahl von jeweils lokal mit der ersten Faserverbundlage verbundenen, insbesondere unidirektionalen, Faserlagenstreifen vorgesehen wird, die quer zu dem Bauteilkrümmungsverlauf angeordnet und entlang des Bauteilkrümmungsverlaufs unterbrochen sind.

Gemäß einer Weiterbildung des Verfahrens werden die Faserlagenstreifen mit einem Abstand zueinander vorgesehen, welcher bei dem Einlegen in die gekrümmte oder komplexe Konsolidierungsform, insbesondere exakt, zur Anlage der Faserlagenstreifen aneinander kompensiert wird.

Bei einer weiteren Weiterbildung wird der Stapel mit zumindest einer dritten Faserverbundlage bereitgestellt, welche auf die zweite Faserverbundlage aufgebracht wird und im Vergleich zu der zweiten Faserverbundlage mit an einer inneren Krümmungsseite stärker voneinander beabstandeten Faserlagenstreifen vorgesehen wird.

Gemäß einer Ausführungsform des Verfahrens werden die Faserlagenstreifen mit einem Überlapp untereinander vorgesehen, welcher bei dem Einlegen in die gekrümmte oder komplexe Konsolidierungsform, insbesondere exakt, zur Anlage der Faserlagenstreifen aneinander kompensiert wird.

Bei einer weiteren Weiterbildung wird der Stapel mit zumindest einer dritten Faserverbundlage bereitgestellt, welche auf die zweite Faserverbundlage aufgebracht wird und im Vergleich zu der zweiten Faserverbundlage mit an einer äußeren Krümmungsseite stärker überlappenden Faserlagenstreifen vorgesehen wird.

Möglich sind ferner Ausführungsformen des Verfahrens, wobei in der oben dargestellten Weise an einer inneren Krümmungsseite eine zweite Faserverbundlage und ggfs. weitere Faserverbundlagen mit Lücken und an einer äußeren Krümmungsseite eine zweite Faserverbundlage und ggfs. weitere Faserverbundlagen mit Überlapp vorgesehen werden.

Gemäß einer weiteren Ausführungsform des Verfahrens wird die erste Faserverbundlage mit einer Mehrzahl von unidirektionalen Faserlagenstreifen bereitgestellt, die entlang dem Bauteilkrümmungsverlauf angeordnet und quer zu dem Bauteilkrümmungsverlauf unterbrochen nebeneinander vorgesehen werden, so dass sich die Faserlagenstreifen der ersten Lage mit den Faserlagenstreifen der zweiten Lage kreuzen.

Gemäß einer Ausführungsform eines Konsolidierungswerkzeugs enthält die Transportschicht ein Gewebe, insbesondere Glasfasergewebe. Ein solches Gewebe weist für Gase gute oder zumindest ausreichende Transporteigenschaften und dennoch eine geringe Oberflächenrauigkeit auf. Vorteilhaft kann auf diese Weise die Oberflächengüte bzw. Oberflächenqualität des hergestellten Faserverbundbauteils verbessert werden.

Gemäß einer vorteilhaften Weiterbildung weist das Gewebe ein Flächengewicht im Bereich von 25 bis 400 g/m² auf. Ein vorteilhafter Bereich des Flächengewichts liegt bei 60 bis 200 g/m². Beispielhaft kann ein Glasfasergewebe mit ein Flächengewicht von 100 g/m² eingesetzt werden.

Gemäß einer vorteilhaften Ausführungsform des Konsolidierungswerkzeugs ist die Oberflächenschicht als perforierte Folie ausgebildet. Bei der Oberflächenschicht handelt es sich um eine Trennschicht, welche das Material des herzustellenden Bauteils von der Transportschicht trennt. Sofern es sich dabei um eine perforierte Folie handelt, trägt diese zu einer optimalen Entlüftung normal zur Bauteilebene, d. h. in z-Richtung, und gleichzeitig in synergetischer Weise zu einer erhöhten Oberflächengüte bei. Es wird somit durch die Kombination der Oberflächenschicht und der Transportschicht eine Entlüftung in alle drei Raumrichtungen ermöglicht, was die Gefahr von Einschlüssen und dergleichen stark senkt. Zudem wird im Vergleich zu einem herkömmlichen Saugvlies die Oberflächenqualität des Bauteils stark verbessert. Insgesamt wird somit die Bauteilqualität vorteilhaft erhöht.

Gemäß einer vorteilhaften Ausführungsform des Konsolidierungswerkzeugs ist die Oberflächenschicht regelmäßig perforiert ausgebildet. Auf diese Weise ist eine gleichmäßige Entlüftung in allen Bereichen des Bauteils ermöglicht. Die Perforation weist dabei insbesondere einen Flächenanteil der Oberflächenschicht von zumindest 0,02% auf, beispielsweise im Bereich von 0,02 % bis 0,1 %. Denkbar sind aber auch größere Flächenanteile, insbesondere von bis zu 2,8 %.

Gemäß einer Ausführungsform des Konsolidierungswerkzeugs weist die Oberflächenschicht Löcher mit einem Durchmesser im Bereich von 0,1 bis 3 mm auf. Bei bevorzugten Ausführungsformen handelt es sich um Lochdurchmesser im Bereich von 0,3 bis 1 mm. Somit wird die Oberflächengüte nur minimal durch die Perforation beeinflusst.

Gemäß einer Ausführungsform des Konsolidierungswerkzeugs weist die Oberflächenschicht einen Lochabstand im Bereich von etwa 2 mm bis 80 mm bzw. 0,1 bis 3 Zoll, insbesondere etwa 12 mm bis 40 mm bzw. 0,5 bis 1,5 Zoll, vorzugsweise etwa 12 mm bis 26 mm bzw. 0,5 bis 1 Zoll, auf. Insbesondere ist der Lochabstand bei kleinerem Lochdurchmesser geringer und bei größerem Lochdurchmesser größer, sodass insgesamt ein erforderlicher Flächenanteil der Perforation bereitgestellt wird.

Gemäß einer weiteren Ausführungsform des Konsolidierungswerkzeugs ist die Vakuumabdeckung zur Bereitstellung eines maximalen absoluten Drucks von 20 mbar ausgelegt. Beispielsweise kann dies eine Anforderung an die Bauteilherstellung im Luftfahrtbereich sein.

Gemäß einer vorteilhaften Ausführungsform des Konsolidierungswerkzeugs sind die Transportschicht und die Oberflächenschicht flexibel an die Bauteilform anpassbar ausgebildet. Auf diese Weise wird dadurch die Bauteilform bzw. die Formfreiheit bei deren Auslegung nicht beeinträchtigt.

Gemäß einer vorteilhaften Weiterbildung sind die Oberflächenschicht und die Transportschicht drapierbar ausgebildet. Auf diese Weise können besonders vorteilhaft auch komplexe Bauteilformen dargestellt werden, ohne dass aufwendige Zuschnitte notwendig sind. Denkbar ist auch eine Drapierbarkeit mit vorherigem einschneiden.

Gemäß einer weiteren vorteilhaften Ausführungsform des Konsolidierungswerkzeugs sind die Oberflächenschicht und die Transportschicht jeweils auf der Seite des Formabschnitts und auf der Seite der Vakuumabdeckung vorgesehen. Dementsprechend ist das Bauteil vorzugsweise von der Oberflächenschicht und der Transportschicht, insbesondere komplett, eingehüllt. Auf diese Weise wird vorteilhaft eine optimale Entlüftung und Oberflächengüte auf beiden Seiten des Faserverbundbauteils gewährleistet.

Gemäß einer vorteilhaften Ausführungsform des Konsolidierungswerkzeugs ist zwischen der Vakuumabdeckung und der Transportschicht ein Druckkörperangeordnet. Insbesondere handelt es sich um ein Druckblech. Dieses sorgt für eine gleichmäßige Druckverteilung auf den Formabschnitt bzw. das Material des herzustellenden Faserverbundbauteils.

Gemäß einer vorteilhaften Ausführungsform des Konsolidierungswerkzeugs ist zwischen der Vakuumabdeckung und dem Druckkörper eine zur vollständigen Evakuierung vorgesehene Evakuierungsschicht bzw. Vakuumentlüftungsschicht angeordnet. Es kann sich dabei insbesondere um ein sogenanntes Saugvlies handeln, was abgesehen von der besonderen Anordnung beispielsweise einer herkömmlichen Vakuumentlüftungsschicht entspricht.

Gemäß einer vorteilhaften Ausführungsform des Konsolidierungswerkzeugs weist die Vakuumabdeckung eine den Formabschnitt überdeckende Folie auf, welche an dem Formabschnitt vakuumdicht befestigbar ist. Insbesondere ist dazu ein Dichtband vorgesehen, welches die Vakuumabdeckung mit dem Formabschnitt vakuumdicht verbindet. Darüber hinaus ist die Vakuumabdeckung vakuumdicht mit einer Vakuumquelle, beispielsweise einer Vakuumpumpe, verbunden. Vorteilhaft ist somit ein einfacher Aufbau des Konsolidierungswerkzeugs bereitgestellt.

Gemäß einer Ausführungsform des Konsolidierungswerkzeugs ist der Formabschnitt zum Konsolidieren des Materials des herzustellenden Bauteils beheizbar ausgebildet. Insbesondere können darin Heizelemente, beispielsweise elektrische Heizspulen, Heizleiter, Halbleiter-Heizelemente oder mit einem Heizmedium betreibbare Heizleitungen, vorgesehen sein.

Bei einer weiteren Ausführungsform des Konsolidierungswerkzeugs kann auch das gesamte Konsolidierungswerkzeug zum Einbringen in einen Ofen ausgebildet sein, der das Konsolidierungswerkzeug über eine Konsolidierungstemperatur erwärmt. Eine Konsolidierungstemperatur liegt dabei insbesondere oberhalb einer Schmelztemperatur des thermoplastischen Materials des herzustellenden Bauteils. In diesem Fall ist das gesamte Konsolidierungswerkzeug entsprechend hitzefest ausgelegt bzw. ausgebildet.

Bei einer Ausführungsform des Konsolidierungswerkzeugs ist der Formabschnitt gekrümmt und/oder komplex geformt, insbesondere mehrfach gekrümmt, ausgebildet.

Die obigen Ausgestaltungen und Weiterbildungen lassen sich, sofern sinnvoll, beliebig miteinander kombinieren. Dabei sind sämtliche Merkmale und Vorteile eines Halbzeugs zum Herstellen eines Faserverbundbauteils auf ein Verfahren zum Herstellen eines Faserverbundbauteils übertragbar, und umgekehrt. Darüber hinaus sind sämtliche Merkmale und Vorteile eines Konsolidierungswerkzeugs zum Herstellen eines Faserverbundbauteils auf ein Verfahren zum Herstellen eines Faserverbundbauteils übertragbar, und umgekehrt. Zudem lassen sich, sofern sinnvoll, sämtliche Merkmale eines Halbzeugs, Verfahrens und Konsolidierungswerkzeugs zur Herstellung eines Faserverbundbauteils auf ein entsprechend hergestelltes Faserverbundbauteil übertragen.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZBESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung eines der Anmelderin bekannten Halbzeugs zum Herstellen eines Faserverbundbauteils;
- Fig. 2: eine schematische Darstellung eines Halbzeugs zum Herstellen eines Faserverbundbauteils gemäß einer ersten Ausführungsform;
- Fig. 3: eine schematische Darstellung eines Halbzeugs zum Herstellen eines Faserverbundbauteils gemäß einer zweiten Ausführungsform;
- Fig. 4: eine schematische Darstellung eines Halbzeugs zum Herstellen eines Faserverbundbauteils gemäß einer dritten Ausführungsform;
- Fig. 5: eine Draufsicht auf das Halbzeug gemäß Fig. 3;
- Fig. 6: eine schematische Darstellung eines Halbzeugs gemäß einer Weiterbildung der zweiten Ausführungsform nach Fig. 3;
- Fig. 7: eine schematische Darstellung eines Halbzeugs gemäß einer Weiterbildung der dritten Ausführungsform nach Fig. 4;
- Fig. 8: eine schematische Schnittdarstellung eines Konsolidierungswerkzeugs; und
- Fig. 9: eine schematische Darstellung einer Draufsicht auf eine Oberflächenschicht des Konsolidierungswerkzeugs nach Fig. 8.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktions-gleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSFORMEN

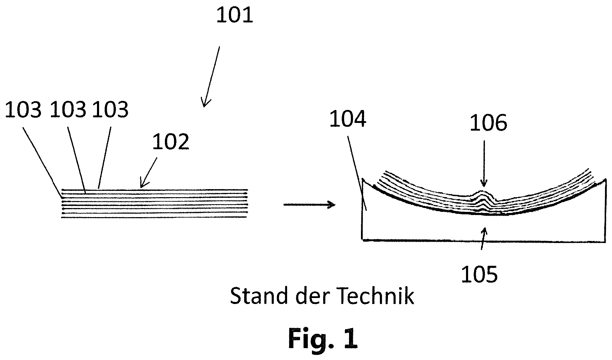

Fig. 1 zeigt eine schematische Darstellung eines der Anmelderin bekannten Halbzeugs 101 zum Herstellen eines Faserverbundbauteils.

Es handelt sich dabei um ein ebenes Laminat mehrerer miteinander gehefteter Faserverbundschichten 103, das beispielsweise mit einem herkömmlichen Tapelegeverfahren hergestellt ist. Dabei werden breite Tapes (bis 150 mm) flächig abgelegt und jeweils mit der darunter liegenden Tapelage geheftet.

Ebene Gelege aus thermoplastischen CFK-Laminaten können damit einfach und schnell hergestellt werden, siehe Darstellung links in Fig. 1. Wird ein derartiges Halbzeug 101 aber in eine gekrümmte Form 104 eines Konsolidierungswerkzeugs 105 eingelegt, führt dies wegen der gehefteten Tapelagen und deren in der Schichtfolge unterschiedlichen Krümmungsradien auf der Innenseite der Krümmung zwangsläufig zu hier schematisch als Welle dargestellten Ondulationen 106.

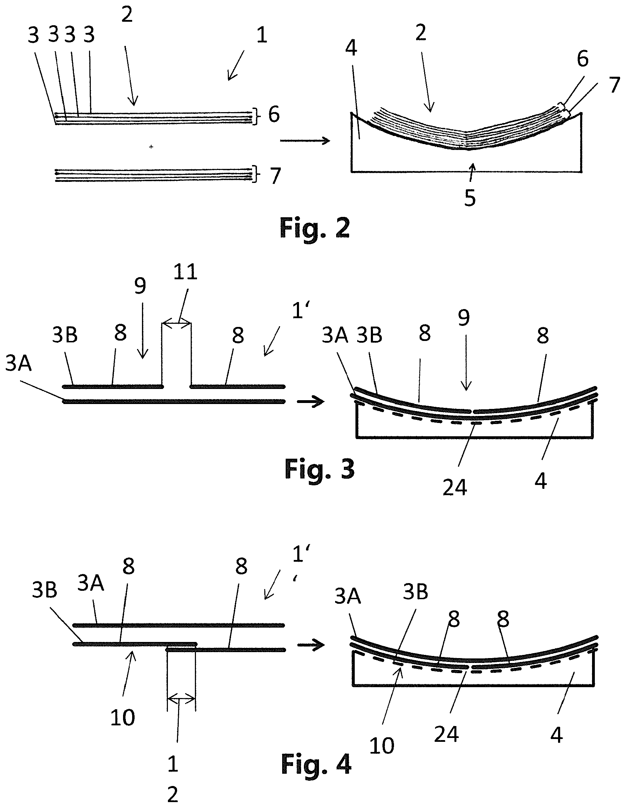

Fig. 2 zeigt eine schematische Darstellung eines Halbzeugs zum Herstellen eines Faserverbundbauteils gemäß einer ersten Ausführungsform.

Es handelt sich um ein Halbzeug 1 zur Herstellung eines thermoplastischen Faserverbundbauteils, mit einem Stapel 2 lokal miteinander verbundener thermoplastischer Faserverbundlagen 3. Die Faserverbundlagen 3 sind zum ondulationsfreien Ausgleich einer Bauteilkrümmung bei einem Einlegen in einen gekrümmten Formabschnitt 4 eines Konsolidierungswerkzeugs 5 zumindest abschnittsweise aneinander abgleitbar ausgebildet.

Bei der hier dargestellten Ausführungsform eines Halbzeugs 1 umfasst der Stapel 2 dazu ein erstes Paket 6 miteinander verbundener thermoplastischer Faserverbundlagen 3 und ein zweites Paket 7 miteinander verbundener thermoplastischer Faserverbundlagen 3, wobei das zweite Paket 7 vollflächig, vorzugsweise lose, auf dem ersten Paket 6 aufliegt, und dementsprechend zum ondulationsfreien Ausgleich einer Bauteilkrümmung auf dem ersten Paket 6 abgleitbar vorgesehen ist.
Ein Paket 6, 7 weist vorzugsweise nur wenige Faserverbundlagen 3, in der dargestellten Ausführungsform rein beispielhaft vier Faserverbundlagen, auf. Es kann sich bei der Anzahl insbesondere um eine, je nach Stärke der Krümmung der herzustellenden Bauteils, bedarfsgerecht einstellbare Anzahl, vorzugsweise im einstelligen Bereich (1 - 9), handeln.

Eine unterste Faserverbundlage des ersten Pakets 6 ist hier derart ausgebildet, dass sie an einer obersten Faserverbundlage des zweiten Pakets 7 abgleiten kann, sodass die Krümmung des Formabschnitts 4 bei einem Einlegen des Halbzeugs 1 in den Formabschnitt 4 zwischen den Paketen 6, 7 kompensierbar ist.

Innerhalb eines Stapels ist durch die geringe Lagenanzahl nur ein geringer Einfluss der Krümmung vorhanden. Ondulationen sind hier somit minimal oder ggfs. durch lokale Materialdehnung bzw. Stauchung, insbesondere des thermoplastischen Materials, kompensierbar. Insgesamt wird somit wird auf diese Weise eine Ondulation an der Innenseite der Krümmung vermieden.

Fig. 3 zeigt eine schematische Darstellung eines Halbzeugs 1' zum Herstellen eines Faserverbundbauteils gemäß einer zweiten Ausführungsform.

Auch hierbei handelt es sich um ein Halbzeug 1' zur Herstellung eines thermoplastischen Faserverbundbauteils, mit einem Stapel 2 lokal miteinander verbundener thermoplastischer Faserverbundlagen 3. Die Faserverbundlagen 3 sind ebenfalls zum ondulationsfreien Ausgleich einer Bauteilkrümmung bei einem Einlegen in einen gekrümmten Formabschnitt 4 eines Konsolidierungswerkzeugs 5 zumindest abschnittsweise aneinander abgleitbar ausgebildet.

Bei diesem Halbzeug 1' umfasst der Stapel 2 jedoch eine erste, in Richtung eines Bauteilkrümmungsverlaufs 24 durchgehende unidirektionale Faserverbundlage 3A und eine zweite Faserverbundlage 3B. Die zweite Faserverbundlage 3B weist eine Mehrzahl von jeweils lokal mit der ersten Faserverbundlage 3A verbundenen unidirektionalen Faserlagenstreifen 8 auf, die quer zu dem Verlauf der Bauteilkrümmung bzw. Bauteilkrümmungsverlauf 24 angeordnet sind.

Die Faserlagenstreifen 8 weisen an einer bezogen auf die erste Faserverbundlage 3A inneren Krümmungsseite 9 einen Abstand 11 (links in Fig. 3) zueinander auf und sind dementsprechend entlang des Bauteilkrümmungsverlaufs 24, d. h. hier in Umfangsrichtung der Krümmung, unterbrochen. Quer zur Bauteilkrümmung 24 bzw. parallel zu einer Krümmungsachse oder einem Krümmungszentrum, verlaufen die Faserlagenstreifen 8 beispielsweise durchgehend. Denkbar ist aber auch, insbesondere bei einem komplexen herzustellenden Faserverbundbauteil, eine mehrdimensionale Krümmung des Formabschnitts 4 vorzusehen. In diesem Fall können die Faserlagenstreifen 8 ggfs. in gleicher Weise auch in Querrichtung zur Kompensation einer Krümmung unterbrochen vorgesehen bzw. ausgebildet sein.

Der Abstand 11 ist sehr exakt bemessen und derart vorgesehen, dass er bei dem Einlegen in die gekrümmte oder komplexe Konsolidierungsform 5 exakt zur Anlage der Faserlagenstreifen 8 aneinander kompensiert wird, siehe Darstellung rechts in Fig. 3.

Unter einer exakten Kompensation ist in diesem Zusammenhang insbesondere eine Kompensation zu verstehen, die zu einer direkten Anlage der Faserverbundstreifen 8, vorzugsweise im sogenannten technischen Nullspalt, führt. Der Abstand 11 ist dazu im Bereich von Zehntel oder Hundertstel Millimeter genau bemessen.

Fig. 4 zeigt eine schematische Darstellung eines Halbzeugs 1" zum Herstellen eines Faserverbundbauteils gemäß einer dritten Ausführungsform.

Es handelt sich dabei um eine Art Umkehrung des Ausführungsbeispiels nach Fig. 3, welche aber auf einem im Wesentlichen gleichen Prinzip des Ausgleichs einer Bauteilkrümmung durch Abgleiten und Kompensation unterschiedlicher Krümmungsradien der Faserverbundlagen 3A, 3B des Stapels 2 beruht.

Im Unterschied weisen bei diesem Halbzeug 1" die Faserlagenstreifen 8 an einer bezogen auf die erste Faserverbundlage 3A äußeren Krümmungsseite 10 einen Überlapp 12 zueinander auf, siehe Darstellung links in Fig. 4. Die Faserlagenstreifen 8 werden hier beim Einlegen in den Formabschnitt durch dessen Krümmung entlang des Bauteilkrümmungsverlaufs 24 auseinander gezogen, sodass der Überlapp 12 bei dem Einlegen kompensiert wird, siehe Darstellung rechts in Fig. 4.

Der Überlapp ist exakt derart bemessen und vorgesehen, dass er bei dem Einlegen in die gekrümmte oder komplexe Konsolidierungsform 5 zur Anlage der Faserlagenstreifen 8 aneinander kompensiert wird. Die Faserlagenstreifen 8 liegen somit in einem in den Formabschnitt 4 eingelegten Zustand des Halbzeugs 1 (siehe rechts in Fig. 4) direkt aneinander an, vorzugsweise in einem technischen Nullspalt.

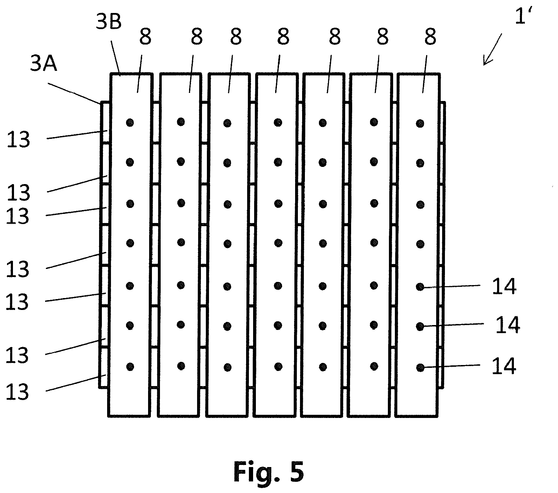

Fig. 5 zeigt eine Draufsicht auf das Halbzeug gemäß Fig. 3.

In dieser Ansicht ist erkennbar, dass auch die erste Faserverbundlage 3A eine Mehrzahl von unidirektionalen Faserlagenstreifen 13 aufweist, die sich mit den Faserlagenstreifen 8 der zweiten Faserverbundlage 3B senkrecht kreuzen. Dementsprechend sind die Faserlagenstreifen 13 entlang dem Bauteilkrümmungsverlauf angeordnet und quer zu dem Bauteilkrümmungsverlauf unterbrochen nebeneinander, jedoch direkt aneinander anliegend vorgesehen. Dieser Aufbau der ersten Faserverbundlage 3A ist auf das Ausführungsbeispiel nach Fig. 4 in gleicher Weise übertragbar.

An den Kreuzungspunkten sind die Faserlagenstreifen 8 der zweiten Faserverbundlage 3B jeweils mit den Faserlagenstreifen 13 der ersten Faserverbundlage 3A mit Befestigungsmitteln 14, hier beispielhaft jeweils einem Schweißpunkt, verbunden. Es handelt sich somit um eine punktuelle bzw. abschnittsweise Befestigung der zweiten Faserverbundlage 3B an der ersten Faserverbundlage 3A, welche eine ausreichende strukturelle Festigkeit des Halbzeugs zum Einlegen desselben in den Formabschnitt 4 des Konsolidierungswerkzeugs 5 mit hoher Maßhaltigkeit erlaubt. Dennoch ist an Abschnitten abseits der Befestigungsmittel 14, insbesondere im Bereich der Lücken zwischen den Faserlagenstreifen 8 der zweiten Faserverbundlage 3B, eine Beweglichkeit zwischen der ersten Faserverbundlage 3A und der zweiten Faserverbundlage 3B zur Kompensation der Bauteilkrümmung beim Einlegen in den Formabschnitt 4 bereitgestellt. Beispielsweise liegen die erste und zweite Faserverbundlage 3A, 3B dazu in Abschnitten abseits der Befestigungsmittel lose aufeinander auf.

Die Herstellung des Halbzeugs ist vorteilhaft auf einfache Weise durch Ablegen der Faserlagenstreifen 13 und 8 in der gewünschten Anordnung und Setzen der entsprechenden Befestigungsmittel 14 bzw. Schweißpunkte möglich.

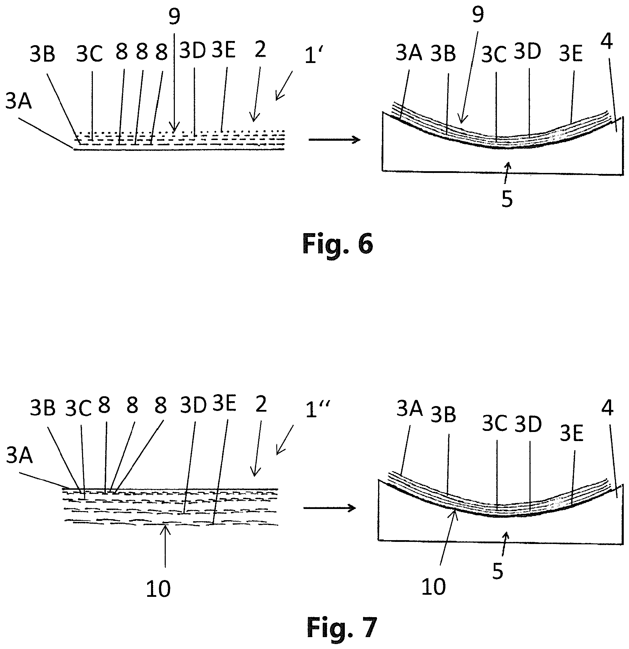

Fig. 6 zeigt eine schematische Darstellung eines Halbzeugs gemäß einer Weiterbildung der zweiten Ausführungsform nach Fig. 3.

Bei diesem Halbzeug 1' sind zusätzlich zu der zweiten Faserverbundlage 3B eine dritte Faserverbundlage 3C sowie weitere Faserverbundlagen 3D, 3E vorgesehen. Die dritte Faserverbundlage 3C ist auf die zweite Faserverbundlage 3B aufgebracht und weist im Vergleich zu der zweiten Faserverbundlage 3B an einer inneren Krümmungsseite 9 stärker voneinander beabstandete Faserlagenstreifen 8 auf. Bei den weiteren Faserverbundlagen 3D, 3E, welche ebenfalls mit Faserlagenstreifen gebildet sind, erhöht sich der Abstand 11 der Faserlagenstreifen entsprechend weiter.

Die Abstände 11 in den zweiten, dritten und weiteren Faserverbundlagen 3B bis 3E werden jeweils durch die Bauteilkrümmung beim Einlegen in den Formabschnitt, d. h. in gleicher Weise, vorzugsweise exakt, kompensiert.

Fig. 7 zeigt eine schematische Darstellung eines Halbzeugs 1 gemäß einer Weiterbildung der dritten Ausführungsform nach Fig. 4.

Bei diesem Halbzeug 1' sind, in umgekehrter Weise wie bei der Ausführungsform nach Fig. 6, ebenfalls eine dritte Faserverbundlage 3C sowie weitere Faserverbundlagen 3D, 3E vorgesehen. Die dritte Faserverbundlage 3C ist dementsprechend auf die zweite Faserverbundlage 3B aufgebracht und weist im Vergleich zu der zweiten Faserverbundlage 3B an einer äußeren Krümmungsseite 10 stärker überlappende Faserlagenstreifen 8 auf. Der Überlapp 12 erhöht sich in den weiteren Faserverbundlagen 3D, 3E.

Die Überlappe 12 in den zweiten, dritten und weiteren Faserverbundlagen 3B bis 3E werden jeweils durch die Bauteilkrümmung beim Einlegen in den Formabschnitt, vorzugsweise exakt, kompensiert.

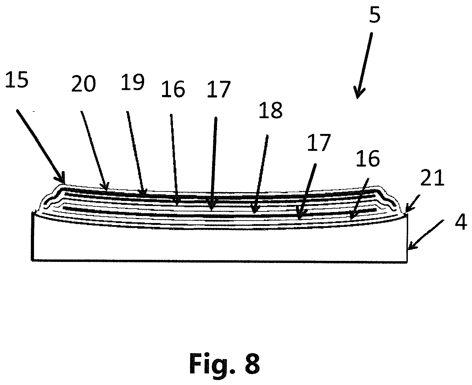

Fig. 8 zeigt eine schematische Schnittdarstellung eines Konsolidierungswerkzeugs 5.

Das Konsolidierungswerkzeug 5 ist zum Herstellen eines thermoplastischen Faserverbundbauteils 18 aus einem Halbzeug 1; 1'; 1" gemäß einer der Figuren 2 bis 7 ausgebildet. Es weist einen eine, hier beispielhaft eindimensional gekrümmte, Bauteilform definierenden Formabschnitt 4 und eine den Formabschnitt 4 abdeckende Vakuumabdeckung 15 zum Ausüben eines Unterdrucks auf das Material des herzustellenden Faserverbundbauteils 18 auf. Selbstverständlich kann bei weiteren Ausführungsformen zur Darstellung komplexer Bauteilformen auch ein mehrfach und/oder mehrdimensional gekrümmter Formabschnitt 4 vorgesehen sein.

Ferner ist eine Transportschicht 16 zum Abtransport von aus dem Material des herzustellenden Faserverbundbauteils 18 abgesaugten Gasen vorgesehen, welche sich über die Bauteiloberfläche des herzustellenden Faserverbundbauteils 18 erstreckt. Das Konsolidierungswerkzeug 5 weist ferner eine luftdurchlässige Oberflächenschicht 17 auf, welche zwischen der Transportschicht 16 und dem Material des herzustellenden Faserverbundbauteils 18 angeordnet ist. Diese dient zum Abtransport von Gasen normal zur Bauteilebene und zur Optimierung einer Oberflächenqualität des herzustellenden Faserverbundbauteils 18.

Die Transportschicht 16 ist dazu als ein Gewebe bzw. ein sogenanntes Sauggewebe, ausgebildet. Vorzugsweise handelt es sich dabei um ein Glasfasergewebe, beispielhaft mit einem Flächengewicht von 100 g/m². Derartige Glasfasergewebe werden beispielsweise von dem Hersteller P-D INTERGLAS TECHNOLOGIES GmbH vertrieben. Mit einer solchen Transportschicht in Kombination mit der Oberflächenschicht ist vorteilhaft eine hohe Oberflächengüte, beispielhaft mit einer mittleren Oberflächenrauhigkeit von 1 µm bzw. Ra 1, (gemessen z. B. nach DIN EN ISO 4287 2010-07) erzielbar.

Bei weiteren Ausführungsformen kann das Flächengewicht der Transportschicht 16, welche die Feinheit des Gewebes charakterisiert, angepasst an eine gewünschte zu erzielende Oberflächenrauhigkeit des herzustellenden Bauteils vorgesehen sein. Für Luftfahrtanwendungen ist die zu erzielende Oberflächenrauhigkeit in der Regel kleiner als Ra 5 (mittlere Oberflächenrauhigkeit von 5 µm). Dies ist mit einem Flächengewicht der Transportschicht 16 im Bereich von 25 bis 400 g/m², insbesondere im Bereich von 60 bis 200 g/m², mit dennoch ausreichenden Transporteigenschaften erzielbar.

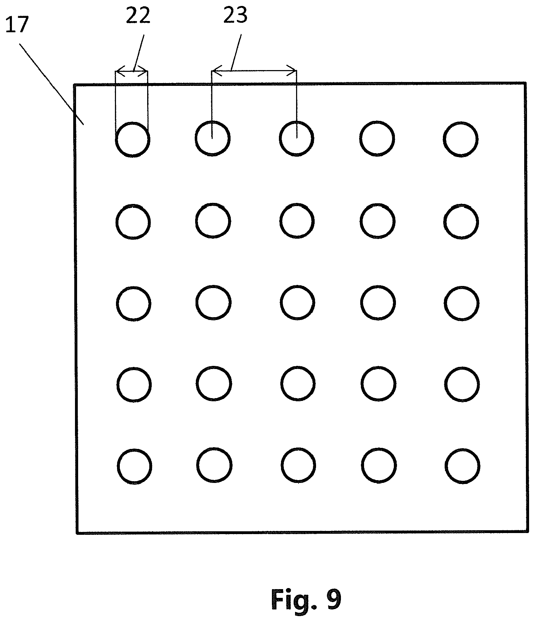

Fig. 9 zeigt eine schematische Darstellung einer Draufsicht auf eine Oberflächenschicht 17 des Konsolidierungswerkzeugs 5 nach Fig. 8.

Die Oberflächenschicht 17 ist als regelmäßig perforierte Folie ausgebildet, welche einen Flächenanteil der Perforation von beispielhaft 0,02 % aufweist. Größere Flächenanteile sind möglich.

Die Oberflächenschicht 17 weist dazu Löcher mit einem Durchmesser 22 von beispielhaft 0,3 mm auf, welche mit einem regelmäßigen Abstand von 25,4 mm bzw. 1 Zoll über die Folie verteilt angeordnet sind. Derartige Folien werden beispielsweise durch den Hersteller AIRTEC EUROPE Sarl unter dem Handelsnamen Thermalimide E RCBS vertrieben.

Die Lochdurchmesser und Abstände können in unterschiedlicher Weise variiert werden, um so den gewünschten Flächenanteil der Perforation ggfs. in unterschiedlicher Weise zu erreichen. Beispielsweise kann ein Lochdurchmesser im Bereich von 0, 1 bis 3 mm, vorzugsweise 0,3 bis 1 mm liegen, während ein Lochabstand im Bereich von etwa 2 mm bis 80 mm bzw. 0,1 Zoll bis 3 Zoll, vorzugsweise etwa 12 mm bis 26 mm bzw. 0,5 bis 1 Zoll, liegen.

Die Oberflächenschicht 17 und die Transportschicht 16 sind sowohl auf der Seite des Formabschnitts 4 als auch auf der Seite der Vakuumabdeckung 15 vorgesehen. An der Seite der Vakuumabdeckung ist zwischen der Vakuumabdeckung 15 und der Transportschicht 16 zudem ein Druckkörper 19 in Form eines Druckblechs angeordnet. Somit kann ein gleichmäßiger Vakuumdruck auf das herzustellende Faserverbundbauteil 18 ausgeübt und dabei eine gleichmäßige Entlüftung an beiden Seiten des herzustellende Faserverbundbauteils 18 vorgenommen werden.

Ferner ist zwischen der Vakuumabdeckung 15 und dem Druckkörper 19 eine zur vollständigen Evakuierung in diesem Bereich vorgesehene Evakuierungsschicht 20 in Form eines sogenannten Saugvlieses vorgesehen. Derartige Saugvliese werden beispielsweise durch den Hersteller AIRTEC EUROPE Sarl unter dem Handelsnamen Airweave® UHT 800 vertrieben.

Die Oberflächenschicht und die Transportschicht sind jeweils flexibel an die Bauteilform anpassbar und drapierbar ausgebildet. Somit sind komplexe Bauteilformen darstellbar, ohne dass sich dies negativ auf die Oberflächenqualität auswirkt.

Mit einem solchen Konsolidierungswerkzeug 5 ist ein Verfahren zum Herstellen eines thermoplastischen Faserverbundbauteils 18 realisierbar. Dazu wird zunächst ein Halbzeug 1; 1'; 1" gemäß einer der Figuren 2 bis 7 bereitgestellt.

In einem weiteren Schritt wird das Halbzeug in den Formabschnitt 4, der hier beispielhaft gekrümmt ausgebildet ist, eingelegt. An der Unterseite sind dazu die Transportschicht 16 und die Oberflächenschicht 17 bereits in dem Formabschnitt 4 vorgesehen. Bei dem Einlegen gleiten die Faserverbundlagen 3 dementsprechend zum ondulationsfreien Ausgleich der Bauteilkrümmung abschnittsweise aneinander ab. Anschließend können an der Oberseite die Oberflächenschicht 17 und die Transportschicht 16 vorgesehen bzw. aufgelegt werden.

In einem noch weiteren Schritt werden die Faserverbundlagen sodann zu einem gemeinsamen Bauteil konsolidiert. Dazu wird zunächst die Vakuumabdeckung samt Druckkörper 19 und Evakuierungsschicht 20 aufgebracht, ein Vakuum angelegt und das Bauteil erhitzt.

Das Vakuum kann beispielsweise mittels einer an die Vakuumabdeckung angeschlossenen Vakuumpumpe erzeugt werden, wobei ein Vakuumdruck beispielsweise bei maximal 20 mbar absolutem Druck liegt.

Die entsprechend einzustellende Temperatur bzw. Konsolidierungstemperatur liegt deutlich oberhalb der Schmelztemperatur des Thermoplastmaterials des Halbzeugs 1 bzw. des herzustellenden Faserverbundbauteils 15 und wird für eine vorbestimmte Zeitdauer, beispielsweise eine Haltezeit von mindestens 10 Minuten, über der Schmelztemperatur gehalten.

Die Erwärmung kann beispielsweise in einem Ofen durch eine Erwärmung der Luft erfolgen. Alternativ kann eine direkte Erwärmung des Formabschnitts durch Heizelemente vorgesehen sein. Speziell die direkte Erwärmung des Formanschnitts des Konsolidierungswerkzeugs hat den Vorteil, dass das Halbzeug zuerst auf der Werkzeugseite über die Schmelztemperatur erwärmt wird und somit ein gleichmäßiger Temperaturgradient entsteht. Nach der Haltezeit kann das Material wieder auf Raumtemperatur abkühlen.

Auf diese Weise ist ein gekrümmtes Faserverbundbauteil mit unidirektionalem Faserverlauf ohne Ondulationen herstellbar. In gleicher Weise kann auch ein komplexes, d. h. mehrfach und/oder mehrdimensional gekrümmtes Bauteil hergestellt werden.

Obwohl die vorliegende Erfindung anhand bevorzugter Ausführungsbeispiele vorstehend vollständig beschrieben wurde, ist sie darauf nicht beschränkt, sondern auf viel-fältige Art und Weise modifizierbar.

Beispielsweise sind selbstverständlich mit einem derartigen Konsolidierungswerkzeug grundsätzlich auch ebene thermoplastische Faserverbundbauteile herstellbar, wobei auch hier insbesondere die verbesserte Entlüftung und Oberflächenqualität vorteilhaft ist.

### BEZUGSZEICHENLISTE

- 1: Halbzeug
- 2: Stapel
- 3: Faserverbundlage
- 3A: erste Faserverbundlage
- 3B: zweite Faserverbundlage
- 3C: dritte Faserverbundlage
- 3D, 3E: weitere Faserverbundlagen
- 4: Formabschnitt
- 5: Konsolidierungswerkzeug
- 6: erstes Paket
- 7: zweites Paket
- 8: Faserlagenstreifen
- 9: innere Krümmungsseite
- 10: äußere Krümmungsseite
- 11: Abstand
- 12: Überlapp
- 13: Faserlagenstreifen
- 14: Befestigungsmittel
- 15: Vakuumabdeckung
- 16: Transportschicht
- 17: Oberflächenschicht
- 18: Faserverbundbauteil
- 19: Druckkörper
- 20: Evakuierungsschicht
- 21: Dichtungsband
- 22: Durchmesser
- 23: Lochabstand
- 24: Bauteilkrümmungsverlauf

## Patentansprüche

1. Halbzeug (1) zur Herstellung eines thermoplastischen Faserverbundbauteils, mit einem Stapel (2) von zumindest teilweise lokal miteinander verbundenen thermoplastischen Faserverbundlagen (3; 3A, 3B; 3A, 3B, 3C, 3D, 3E), wobei die Faserverbundlagen (3; 3A, 3B; 3A, 3B, 3C, 3D, 3E) zum ondulationsfreien Ausgleich einer Bauteilkrümmung bei einem Einlegen in einen gekrümmten oder komplexen Formabschnitt (4) eines Konsolidierungswerkzeugs (5) zumindest abschnittsweise aneinander abgleitbar ausgebildet sind.

2. Halbzeug nach Anspruch 1, wobei der Stapel (2) ein erstes Paket (6) miteinander verbundener thermoplastischer Faserverbundlagen (3) und ein zweites Paket (7) miteinander verbundener thermoplastischer Faserverbundlagen (3) umfasst, wobei das zweite Paket (7) vollflächig auf dem ersten Paket (6) aufliegt und ondulationsfrei zum Ausgleich einer Bauteilkrümmung auf dem ersten Paket (6) abgleitbar vorgesehen ist.

3. Halbzeug nach Anspruch 1 oder 2, wobei der Stapel (2) eine erste, in Richtung eines Bauteilkrümmungsverlaufs (24) durchgehende Faserverbundlage (3A), und eine zweite Faserverbundlage (3B) aufweist, wobei die zweite Faserverbundlage (3B) eine Mehrzahl von jeweils lokal mit der ersten Faserverbundlage verbundenen, insbesondere unidirektionalen, Faserlagenstreifen (8) aufweist, die quer zu dem Bauteilkrümmungsverlauf (24) angeordnet und entlang des Bauteilkrümmungsverlaufs unterbrochen sind.

4. Halbzeug nach Anspruch 3, wobei die Faserlagenstreifen (8) an einer bezogen auf die erste Faserverbundlage (3A) inneren Krümmungsseite (9) einen Abstand (11) zueinander aufweisen, welcher derart vorgesehen ist, dass er bei dem Einlegen in die gekrümmte oder komplexe Konsolidierungsform (5), insbesondere exakt, zur Anlage der Faserlagenstreifen (8) aneinander kompensiert wird.

5. Halbzeug nach Anspruch 3 oder 4, wobei die Faserlagenstreifen (8) an einer bezogen auf die erste Faserverbundlage (3A) äußeren Krümmungsseite (10) einen Überlapp (12) zueinander aufweisen, welcher derart vorgesehen ist, dass er bei dem Einlegen in die gekrümmte oder komplexe Konsolidierungsform (5), insbesondere exakt, zur Anlage der Faserlagenstreifen (8) aneinander kompensiert wird.

6. Halbzeug nach einem der Ansprüche 3 bis 5, wobei zumindest eine dritte Faserverbundlage (3C) vorgesehen ist, welche auf die zweite Faserverbundlage (3B) aufgebracht ist und im Vergleich zu der zweiten Faserverbundlage (3B) an einer inneren Krümmungsseite (9) stärker voneinander beabstandete und/oder an einer äußeren Krümmungsseite (10) stärker überlappende Faserlagenstreifen (8) aufweist.

7. Halbzeug nach einem der Ansprüche 3 bis 6, wobei die erste Faserverbundlage (3A) eine Mehrzahl von, insbesondere unidirektionalen, Faserlagenstreifen (13) aufweist, die entlang dem Bauteilkrümmungsverlauf (24) angeordnet und quer zu dem Bauteilkrümmungsverlauf unterbrochen nebeneinander vorgesehen sind, so dass sich die Faserlagenstreifen (13) der ersten Faserverbundlage (3A) mit den Faserlagenstreifen (8) der zweiten Faserverbundlage (3B) kreuzen.

8. Verfahren zum Herstellen eines thermoplastischen Faserverbundbauteils, mit den Schritten:
Bereitstellen eines Halbzeugs (1) gemäß einem der vorangehenden Ansprüche;
Einlegen des Halbzeugs (1) in einen gekrümmten oder komplexen Formabschnitt (4) eines Konsolidierungswerkzeugs (5), wobei die Faserverbundlagen (3) zum ondulationsfreien Ausgleich einer Bauteilkrümmung zumindest abschnittsweise aneinander abgleiten; und
Konsolidieren der Faserverbundlagen (3) zu einem gemeinsamen Bauteil.

9. Konsolidierungswerkzeug (5) zum Herstellen eines thermoplastischen Faserverbundbauteils, insbesondere aus einem Halbzeug (1) gemäß einem der Ansprüche 1 bis 7 und/oder mit einem Verfahren gemäß Anspruch 8, mit:
einem eine Bauteilform definierenden Formabschnitt (4);
einer den Formabschnitt (4) abdeckenden Vakuumabdeckung (15) zum Ausüben eines Unterdrucks auf das Material des herzustellenden Faserverbundbauteils (18);
einer sich über eine Bauteiloberfläche erstreckenden Transportschicht (16) zum Abtransport von aus dem Material des herzustellenden Faserverbundbauteils (18) abgesaugten Gasen; und
einer luftdurchlässigen Oberflächenschicht (17), welche zwischen der Transportschicht (16) und dem Material des herzustellenden Faserverbundbauteils (18) angeordnet ist.

10. Konsolidierungswerkzeug nach einem der vorangehenden Ansprüche, wobei die Transportschicht (16) ein Gewebe, insbesondere Glasfasergewebe, enthält, insbesondere mit einem Flächengewicht im Bereich von 25 bis 400 g/m², vorzugsweise 60 bis 200 g/m².

11. Konsolidierungswerkzeug nach einem der vorangehenden Ansprüche, wobei die Oberflächenschicht (17) als perforierte, insbesondere regelmäßig perforierte, Folie ausgebildet ist, vorzugsweise mit einem Flächenanteil der Perforation von zumindest 0,02%.

12. Konsolidierungswerkzeug nach Anspruch 11, wobei die Oberflächenschicht (17) Löcher mit einem Durchmesser (22) im Bereich von 0,1 mm bis 3 mm, insbesondere 0,3 mm bis 1 mm, und/oder einen Lochabstand (23) im Bereich von 2 mm bis 80 mm, insbesondere 12 mm bis 40 mm, vorzugsweise 12 mm bis 26 mm, aufweist.

13. Konsolidierungswerkzeug nach einem der Ansprüche 9 bis 12, wobei die Oberflächenschicht (17) und die Transportschicht (16) auf der Seite des Formabschnitts (4) und auf der Seite der Vakuumabdeckung (15) vorgesehen sind und/oder zwischen der Vakuumabdeckung (15) und der Transportschicht (16) ein Druckkörper (19), insbesondere ein Druckblech, angeordnet ist, vorzugsweise mit einer zwischen der Vakuumabdeckung (15) und dem Druckkörper (19) zur vollständigen Evakuierung vorgesehenen Evakuierungsschicht (20), besonders bevorzugt in Form eines Saugvlieses.

14. Konsolidierungswerkzeug nach einem der vorangehenden Ansprüche, wobei die Oberflächenschicht und die Transportschicht flexibel an die Bauteilform anpassbar, insbesondere drapierbar, ausgebildet sind.

15. Gekrümmtes oder komplexes thermoplastisches Faserverbundbauteil (18), insbesondere für ein Luft- oder Raumfahrzeug, welches mit einem Halbzeug gemäß einem der Ansprüche 1 bis 7 und/oder mit einem Verfahren gemäß Anspruch 8 und/oder mit einem Konsolidierungswerkzeug gemäß einem der Ansprüche 9 bis 14 hergestellt ist.
